(19) Europäisches Patentamt / European Patent Office / Office européen des brevets

(11) **EP 3 931 603 B1**

(12) **EUROPEAN PATENT SPECIFICATION**

(45) Date of publication and mention of the grant of the patent:
**30.07.2025 Bulletin 2025/31**

(21) Application number: **20767167.8**

(22) Date of filing: **28.02.2020**

(51) International Patent Classification (IPC):
*G01V 3/30* (2006.01)   *E21B 47/00* (2012.01)
*G01V 3/38* (2006.01)   *G01V 3/18* (2006.01)

(52) Cooperative Patent Classification (CPC):
**G01V 3/38; G01V 3/30**

(86) International application number:
**PCT/NO2020/050053**

(87) International publication number:
**WO 2020/180191 (10.09.2020 Gazette 2020/37)**

(54) **ESTIMATING ELECTRICAL PERMITTIVITY**

SCHÄTZUNG DER DIELEKTRIZITÄTSKONSTANTE

ESTIMATION DE LA PERMITTIVITÉ ÉLECTRIQUE

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 01.03.2019 GB 201902794
11.06.2019 GB 201908345

(43) Date of publication of application:
05.01.2022 Bulletin 2022/01

(60) Divisional application:
25173989.2 / 4 571 367

(73) Proprietor: **Equinor Energy AS**
**4035 Stavanger (NO)**

(72) Inventor: **STALHEIM, Stein Ottar**
**5174 Mathopen (NO)**

(74) Representative: **Lind, Robert**
**Marks & Clerk LLP**
**2nd Floor, Wytham Court**
**11 West Way**
**Oxford OX2 0JB (GB)**

(56) References cited:
WO-A1-2014/014372   WO-A1-2018/132705
WO-A1-2019/066672   WO-A2-2017/165480
US-A- 4 158 165   US-A- 4 511 843
US-A- 5 811 973

• HIZEM MEHDI ET AL: "Dielectric Dispersion: A New Wireline Petrophysical Measurement", SPE ANNUAL TECHNICAL CONFERENCE AND EXHIBITION, DENVER, COLORADO, USA, 2008, 21 September 2008 (2008-09-21), XP055964913, Retrieved from the Internet <URL:https://onepetro.org/SPEATCE/proceedings/08ATCE/All-08ATCE/SPE-116130-MS/144997> [retrieved on 20220926], DOI: 10.2118/116130-MS
• CHEN YONG-HUA ET AL: "A modeling study of borehole radar for oil-field applications", GEOPHYSICS, vol. 67, no. 5, 1 September 2002 (2002-09-01), US, pages 1486 - 1494, XP055966718, ISSN: 0016-8033, DOI: 10.1190/1.1512793
• HUSSEIN HARBI AND GEORGE A MCMECHAN: "Conductivity and scattering Q in GPR data: Example from the Ellenburger dolomite, central Texas", GEOPHYSICS, SOCIETY OF EXPLORATION GEOPHYSICISTS, US, vol. 77, no. 4, 1 July 2012 (2012-07-01), pages H63 - H78, XP001576775, ISSN: 0016-8033, [retrieved on 20120627], DOI: 10.1190/GEO2011-0337.1
• STALHEIM STEIN OTTAR: "DEDUCTING DISPERSIVE PERMITTIVITY FROM LWD RESISTIVITY MEASUREMENTS", SPWLA 60TH ANNUAL LOGGING SYMPOSIUM TRANSACTIONS, 17 June 2019 (2019-06-17), pages 1 - 18, XP055964889, DOI: 10.30632/T60ALS-2019_VVVV

- **ANDERSON B ET AL: "OBSERVATIONS OF LARGE DIELECTRIC EFFECTS ON LWD PROPAGATION-RESISTIVITY LOGS", SPWLA ANNUAL LOGGING SYMPOSIUM, XX, XX, 1 January 2007 (2007-01-01), pages 1 - 11, XP008097099**

**Description**

Technical Field

The present invention relates to a method of estimating the electrical permittivity in a subsurface formation and in particular to such a method that makes use of Logging While Drilling or Wireline obtained resistivity measurements.

Background

In analyzing and understanding geological formations in the context of hydrocarbon production, a key parameter that is considered by the petrophysicist is water saturation $S_w$. In a region that is under investigation (previously identified for example using a seismic survey), a high water saturation level will suggest that the level of recoverable hydrocarbons is low whilst a low water saturation level will suggest that the level of recoverable hydrocarbons is high. Put simply, hydrocarbon saturation is equal to (1 - $S_w$). The estimation of water saturation influences major investment decisions including property acquisitions and divestment, infrastructure for extracting and transporting reserves, locating and planning new wells, defining data acquisition programs, completion decisions, reserves calculations, and stimulation programs. Estimating water saturation conventionally involves drilling into the region of interest while collecting data, a process known as Logging While Drilling (LWD), or collecting data using a wireline (WL) after drilling, and analyzing recovered (core) samples. One of the most commonly obtained data types using LWD and WL is electrical resistivity: in fact, resistivity is almost always obtained. Resistivity data typically comprises a phase (shift) resistivity $R_p$ determined by analyzing the phase shift of an electromagnetic wave propagating through the formation, and an amplitude (attenuation) resistivity $R_a$ determined by analyzing the attenuation of the electromagnetic wave. [In the case of an idealized, homogeneous formation the phase resistivity and the amplitude resistivity would be identical.] The term $R_t$ is used below to refer to either phase resistivity or amplitude resistivity, and is referred to as the apparent bulk resistivity.

One method for estimating water saturation is described in Archie, G.E. 1942, "The Electrical Resistivity Log as an Aid in Determining Some Reservoir Characteristics", Trans. of AIME 146 (1): 54-62. This makes use of the following equation:

$$S_w = \left(\frac{R_w}{\phi^{m}\cdot R_t}\right)^{1/n}$$

where $R_w$ is the water resistivity measured on water samples from the reservoir under investigation, $R_t$ is the apparent bulk resistivity obtained by logging (LWD or WL), $\phi$ is the total porosity calculated by density log acquired by LWD or Wireline, $m$ is the cementation exponent, and $n$ is the saturation exponent (where $m$ and $n$ are empirically derived constants). The downside of Archie's approach is that it requires both water samples and core samples and is also subject to errors resulting from incorrect estimation of $m$ and $n$.

Topically the raw LWD measurements are used as inputs to an inversion process which involves iteratively refining estimates of resistivity $R_t$ to produce a resistivity model that corresponds to the raw measurement data and which can then be used to estimate water saturation (using for example Archie). The inversion process takes into account details of tool physics (e.g. geometry, antenna, tool calibration, environment correction, borehole correction, skin correction, correction for geometrical scattering) (Clark 1988, Clark 1990, ..). It is known to improve such inversion processes by incorporating electrical permittivity. This can be obtained using the conventional LWD or WL. [NB. LWD and WL operations are usually performed for a customer, e.g. the operator of an oil and gas field, by a service provider. In the absence of a detailed knowledge of tool physics it is difficult or impossible for such an operator to accurately apply an inversion process to the raw data.]

An alternative approach that relies on formation permittivity rather than resistivity is described in Complex Refraction Index Model, CRIM, (Hizem et al. 2008. "Dielectric Dispersion: A New Wireline Petrophysical Measurements". SPE 116130.). CRIM uses the weighted sum of the wavenumber to calculate the water saturation. For very high frequency, i.e. at GHz range, where there are minimum conductive losses and the polarization is small [the imaginary part in

$$\hat{k}^2 = \omega^2 \mu \varepsilon \left[1 + i\,\frac{\sigma}{\omega\varepsilon}\right]$$

goes to 0], CRIM is reduced to the weighed sum of permittivity to the individual elements in the formation and the water saturation can be defined by.

$$S_w \cdot \phi \approx \frac{\sqrt{\varepsilon^*_{formation}}}{\sqrt{\varepsilon^*_{water}}}$$

where $\varepsilon_{formation}^{*}$ is the apparent bulk permittivity measured on wireline, and $\varepsilon_{water}^{*}$ is the permittivity to formation water measured from previously obtained samples or sometimes assumed to be a constant (between 50 and 80). CRIM makes use of measurements obtained with a special dielectric wireline tool that measures the formation permittivity at a very high frequency, between 20 MHz and 1 GHz. Due to this high frequency, the water saturation is calculated only up to a very shallow in the formation, i.e. on a centimetre scale. The result is therefore not always representative for a non - invaded formation (i.e. the formation that has not been invaded by drilling mud.

With a large amount of water this model can be quite inaccurate mainly due to uncertainties in $\varepsilon_{water}^{*}$. Whilst the CRIM approach does not require core or water samples (at least from the formation under investigation), it does require a complicated water model for $\varepsilon_{water}$ that depends on salinity, temperature and pressure and which is generally known only to the service provider and not the data customer, e.g. the field operator.

Anderson B et. al., "Observations of Large Dielectric Effects on LWD Propagation-Resistivity Logs", SPWLA Annual Logging Symposium, 1 January 2007, describes how the measured phase shift and attenuation data can be inverted directly for permittivity and conductivity.

Summary

It is desirable to improve the accuracy with which water saturation for a region can be determined, and to perform such a determination using resistivity data that is conventionally provided by a service vendor to a data user such as an oil and gas field operator.

According to a first aspect of the present invention there is provided a method of determining the electrical permittivity $\varepsilon_{k}^{f}$ of a region of a subsurface formation surrounding a drilled borehole, the method comprises:

obtaining an assumed electrical permittivity $\varepsilon_{LWD}$;
obtaining resistivity data comprising a first resistivity value $R_p$ determined by analysing the phase delay $\delta$ of an electromagnetic signal traversing said region and a second resistivity value $R_a$ determined by analysing the attenuation $\alpha$ of the electromagnetic signal traversing said region; and
calculating the electrical permittivity of the region from the first and second resistivity values and the assumed electrical permittivity by applying a plane wave approximation to the propagation of said electromagnetic signal across said region.

The resistivity data can be obtained by Logging While Drilling (LWD) using one or more electromagnetic transmitter and receiver pairs, wherein the transmitter to receiver spacing (TRS) is within the radiative zone of the near field region of the or each transmitter.

The resistivity data can be obtained by Logging While Drilling (LWD) using one or more electromagnetic transmitter and receiver pairs, wherein the transmitter to receiver spacing (TRS) satisfies the condition:

$$\lambda/4\pi < \text{TRS} < \lambda,$$

where $\lambda$ is the wavelength of the transmitted electromagnetic signal, and wherein an antenna of the or each transmitter is equal to or shorter than half the wavelength.

The step of calculating the electrical permittivity may comprise calculating the electrical permittivity according to the following equation:

$$\varepsilon = \frac{1}{2} \cdot \varepsilon_{LWD} \cdot \left[ 2 + A_p - A_a \right]$$

, where $\varepsilon$ is the calculated electrical permittivity, $\varepsilon_{LWD}$ is the assumed electrical permittivity, $A_p$ is a term determined by the first resistivity value, and $A_a$ is a term determined by the second resistivity value, wherein $A_p$ and $A_a$ may be given by

$$A_p = \sqrt{1 + \left( \frac{1}{\omega \cdot R_p \cdot \varepsilon_0 \cdot \varepsilon_{LWD}} \right)^2}$$

$$A_a = \sqrt{1 + \left(\frac{1}{\omega \cdot R_a \cdot \varepsilon_0 \cdot \varepsilon_{LWD}}\right)^2}$$

, where $\omega$ is the angular frequency of the electromagnetic signal, $R_p$ is the first resistivity value, $R_a$ is the second resistivity value, and $\varepsilon_0$ is the electrical permittivity of free space.

The step of calculating the electrical permittivity may comprise:

extracting a real part $k_r$ and an imaginary part $k_i$ of a wavenumber from the resistivity data;
using the real and imaginary parts to calculate the electrical permittivity.

The step of using the real and imaginary parts can comprise calculating the electrical permittivity according to the following equation:

$$\varepsilon = \left(\frac{c}{\omega}\right)^2 \cdot \frac{k_r^2 - k_i^2}{\mu}$$

, where $\varepsilon$ is the calculated electrical permittivity, c is the speed of light in vacuum, $\omega$ is the angular frequency of the electromagnetic signal, $k_r$ is the real part of the wavenumber, $k_i$ is the imaginary part of the wavenumber, and $\mu$ is the relative permeability of the formation in said region.

The calculated electrical permittivity can be used to calculate new resistivity values from the phase delay and the attenuation of the electromagnetic signal.

The resistivity data may comprise further resistivity values determined from the phase delay and attenuation of another electromagnetic signal that traversed said region and having a different frequency, and wherein the method further comprises calculating another electrical permittivity of the region from the further resistivity values.

The calculated electrical permittivity can be used to determine a water saturation $S_w$ of the region of the formation.

The method may further comprise drilling the borehole, wherein said step of calculating the electrical permittivity is performed while drilling.

The method may comprise geo-steering a drill bit using the determined electrical permittivity to achieve an optimal placement of the borehole.

According to a second aspect of the present invention there is provided a computer device comprising:

a receiver for receiving electromagnetic data; and
a processor arranged to carry out the method of the first aspect.

According to a third aspect of the present invention there is provided a computer program comprising non-transitory computer readable code which, when run on a computer device, causes the computer device to carry out the method of the first aspect.

According to a further aspect of the present invention there is provided a computer program product comprising a non-transitory computer readable medium and a computer program according to the eighth aspect, wherein the computer program is stored on the non-transitory computer readable medium.

Brief Description of the Drawings

Figure 1 illustrates zones of a region surrounding a borehole as a function of wavelength for an antenna that is equal to or shorter than half the wavelength transmitted by the antenna;
Figure 2 illustrates schematically LWD in a deviated well;
Figure 3 is a flow chart illustrating a method of determining the electrical permittivity from resistivity data;
Figure 4 illustrates schematically a known LWD tool and method for collecting data to determine resistivity;
Figure 5 shows an exemplary curve used to account for the impact of the electrical permittivity $\varepsilon$ on the processed (inverted) resistivity;
Figure 6 illustrates zones of a region surrounding a borehole as a function of wavelength; and
Figure 7 is a flow chart illustrating a method of determining a water saturation level from LWD or WL obtained resistivity data.

Detailed Description

## Determination of electrical permittivity

The electrical permittivity ($\varepsilon$) of rock can be measured and applied in petrophysical evaluation. With new-generation dielectric tools the popularity and application of $\varepsilon$ has increased in the past years. One of the advances of the new-generation tools is the measurement of $\varepsilon$ at multiple frequencies (*f*), also known as the dispersive permittivity ( $\varepsilon(f)$ ). Applications of such data include pore-fluid analysis, water saturation calculation, matrix analysis like Archies' *m,* and shaly sand evaluation including clay volume calculations. Drawbacks with the dielectric tools are that they respond to the invaded zone (a few cm into the formation), and the data must be acquired on wire-line and is therefore not always accessible.

Logging While Drilling (LWD) propagation resistivity records the phase shift and attenuation between two receivers and responds differently to the electrical rock properties (resistivity, permittivity and permeability). The characteristics of the amplitude decay and the phase shift can therefore, under given conditions, be used to extract both the electrical permittivity and the resistivity from the measurements.

Information about $\varepsilon$ and $\varepsilon(f)$ is hidden in the LWD resistivities and can be extracted from the LWD resistivities. The (improved) permittivity determined in this way can be acquired in real time and can be used to identify bypass zones, as geological marker and for geo-steering. The LWD resistivity accuracy can also be improved by replacing the empirical based assumption about $\varepsilon$ (i.e. the initial estimate of $\varepsilon = \varepsilon_{LWD}$) with the more correct value of $\varepsilon$ in the LWD processing. The improvement in accuracy of the LWD resistivity can be significant in rocks with large permittivity (e.g. organic-rich source rock).

Electrical properties of a formation determine its response to an electromagnetic (EM) field. The electrical properties are the electrical conductivity ($\sigma$), the electrical permittivity ($\varepsilon\varepsilon_0$) and the electrical permeability ($\mu\mu_0$). $\mu$ is the relative electrical permeability and is the measure of the magnetization of the substance and $\mu_0$ is the free space electrical permeability. Since magnetic materials are rarely found in oil and gas reservoirs, $\mu$ can usually be assumed to be unity and independent of the formation properties. $\sigma$ is the conductivity (inverse of the resistivity ($R_t$)) and is the measure of the formations ability to conduct electric current. $\sigma$ is heavily related to the amount of saline water (free charges) in formation and is a key input for calculation of formation water saturation (e.g. by use of Archie's equation). $\varepsilon$ is the relative electrical permittivity and is the measure of the polarization of the formation and is the prominent characteristic of dielectric substances. $\varepsilon_0$ is the free space electrical permittivity. Due to strong polarization of water molecules compared with other substances in the formation, $\varepsilon$ is strongly related to the amount of water in the formations and can be used to calculate formation water saturation (e.g. by use of a Complex Refraction Index Model, CRIM). LWD operates at 2 or 3 frequencies and provide two independent, apparent resistivities. One from phase shift ($R_p$) and one from the amplitude decay ($R_a$) measurements. A set with Rp and Ra is processed for each f and for each Transmitter to Receiver Spacing (TRS). The characteristics of $R_p$ and $R_a$ depend on the electrical properties, which in practice are the resistivity and the permittivity when the relative permeability ($\mu$) is unity. The resistivity and permittivity can therefore in principle be simultaneously inverted out from the phase and amplitude measurements.

When determining LWD resistivity an empirically derived resistivity dependent (initial) permittivity $\varepsilon_{LWD}$ is used. If the estimated/assumed permittivity $\varepsilon_{LWD}$ (normally the assumption about electrical permittivity used by the service provider in data processing) does not accurately represent the permittivity of rock being measured, it introduces systematic error in the generated $R_p$ and $R_a$. This is known as the dielectric effect. The error is most pronounced in high resistivity zones, and $R_a$ is more sensitive to $\varepsilon$ compared with $R_p$. The error can be significant with $R_a$ above 10 Ohm-m and with $R_p$ above 100 Ohm-m. Aiming to reduce the dielectric effects on $R_p$ and $R_a$, a couple of algorithms that simultaneously inverts out both resistivity and permittivity have been developed. These algorithms use raw measurements of the phase shift and attenuation as inputs to an inversion process together with detailed knowledge of the complexity of tool physics (tool and antenna geometry, tool calibration, environment correction, borehole correction, skin correction, correction for geometrical scattering etc.). The LWD amplitude and phase measurements are assumed to have a high accuracy and the processed LWD resistivities, $R_p$ and $R_a$, can therefore also be assumed to be accurate.

The relation between $R_p$, $R_a$ and the LWD amplitude and phase measurements is described by the electromagnetic wave properties. In embodiments described herein, a plane wave approximation is used to determine the relative electrical permittivity from $R_p$, $R_a$ and $\varepsilon_{LWD}$. For electromagnetic plane waves all corresponding wave properties can be derived from the wavenumber. For an isotropic formation (where electrical properties are scalar) the wavenumber is

$$\hat{k}^2 = \omega^2 \mu\mu_0 \varepsilon\varepsilon_0 \left[1 + i\frac{\sigma}{\omega\varepsilon\varepsilon_0}\right] = (k_r + ik_i)^2 \tag{1}$$

, where the hat, ^ , stands for complex number, $\omega$ is the angular frequency, *i* is the pure imaginary number $\sqrt{(-1)}$, and $k_r$ and $k_i$

are the real and imaginary part of $\hat{k}$ respectively. An expression for $\sigma$ and $\varepsilon$ is found by decomposing $\hat{k}$ (equation 1) into the real and imaginary parts

$$k_r^2 - k_i^2 = \omega^2 \mu \mu_0 \varepsilon \varepsilon_0 \qquad (2)$$

$$2 \cdot k_r \cdot k_i = \omega \cdot \mu \mu_0 \cdot \sigma \qquad (3)$$

, and solve with respect to $\sigma$ and $\varepsilon$

$$\sigma = \frac{2 k_i k_r}{\omega \mu \cdot \mu_0} \qquad (4)$$

$$\varepsilon = \left(\frac{c}{\omega}\right)^2 \cdot \frac{k_r^2 - k_i^2}{\mu} \qquad (5)$$

, where c is the speed of light in vacuum, $c = \frac{1}{\sqrt{\varepsilon_0 \mu_0}}$. For a non-magnetic formation $\mu$ is equal to 1, and $\sigma$ (equation 4) and $\varepsilon$ (equation 5) can be calculated if $k_r$ and $k_i$ are known. Equation 4 and 5 are known as such, but how to obtain $k_r$ and $k_i$ from LWD resistivity, as is described herein, is not. Embodiments described herein allow for the deduction of $k_r$ and $k_i$ from LWD resistivity measurements and application of equation 5 to determine the permittivity from $k_r$ and $k_i$.

The present method to calculate $k_r$ and $k_i$ is based on a plane wave model of the electrical field (E) given by

$$\overline{E}(z,t) = \acute{x} \overline{E}_x(z,t) = Re\{\acute{x} E_0 e^{-k_i z + i k_r z} e^{-i \omega t}\}$$

$$= \acute{x} E_0 e^{-k_i z} \cos(k_r z - \omega t) \qquad (6)$$

, where z is the position, $t$ is time and $E_0$ is the electrical field strength at $z = t = 0$. $\acute{x}$ is the direction of the E-field and is perpendicular to the direction of propagation. Equation 6 describes a wave that propagates in the direction of $k_r$ and with amplitude decrease most rapidly in the direction of $k_i$. $k_i$ represents the energy loss. Equation 6 shows that $k_r$ describes the phase behaviour and $k_i$ describes the amplitude behaviour of the E-field. Since $R_p$ is processed from the phase shift it is linked to $k_r$, while $R_a$ is processed from the amplitude decay and is linked to $k_i$. The relations between $k_r$ and $R_p$, and between $k_i$ and $R_a$, is found by the general solutions for $k_r$ and $k_i$ by solving equation 2 and 3 with respect to $k_r$ and $k_i$

$$k_r = \frac{\omega}{c} \sqrt{\mu \varepsilon} \left[ \frac{1}{2} \left( \sqrt{1 + \left(\frac{\sigma}{\omega \varepsilon \varepsilon_0}\right)^2} + 1 \right) \right]^{1/2} \qquad (7)$$

$$k_i = \frac{\omega}{c} \sqrt{\mu \varepsilon} \left[ \frac{1}{2} \left( \sqrt{1 + \left(\frac{\sigma}{\omega \varepsilon \varepsilon_0}\right)^2} - 1 \right) \right]^{1/2} \qquad (8)$$

In order to determine $k_r$ and $k_i$ from LWD measurements, they can be calculated using equation 7 and 8 and with $\sigma = 1/R_p$ for $k_r$ (equation 7) and with $\sigma = 1/R_a$, for $k_i$ (equation 8). For $\varepsilon$, the initial estimate of permittivity normally provided by the vendor ($\varepsilon = \varepsilon_{LWD}$) is used. Putting $k_r(R_p, \varepsilon_{LWD})$ (equation 7) and $k_i(R_a, \varepsilon_{LWD})$ (equation 8) into equation 4 and 5 gives

$$\sigma = \omega \cdot \varepsilon_0 . \varepsilon_{LWD} \cdot \left[ (A_p + 1)^{1/2} \cdot (A_a - 1)^{1/2} \right] \qquad (9)$$

$$\varepsilon = \frac{1}{2} \cdot \varepsilon_{LWD} \cdot \left[ 2 + A_p - A_a \right] \qquad (10)$$

, where

$$A_p = \sqrt{1 + \left(\frac{1}{\omega \cdot R_p \cdot \varepsilon_0 \cdot \varepsilon_{LWD}}\right)^2} \qquad (11)$$

$$A_a = \sqrt{1 + \left(\frac{1}{\omega \cdot R_a \cdot \varepsilon_0 \cdot \varepsilon_{LWD}}\right)^2} \qquad (12)$$

, where Equation 9 and 10 are analytic equations for determining the conductivity and relative permittivity of a formation using LWD $R_p$ and $R_a$, and $\varepsilon_{LWD}$ as input. The conductivity $\sigma$ and relative permittivity $\varepsilon$ determined by equation 9 and 10 can be referred to as $\sigma_k^f$ and $\varepsilon_k^f$ respectively, where index k indicates that $\sigma$ and $\varepsilon$ are calculated with the wavenumber (using the plane wave approximation). Index f indicates the frequency at which $\sigma$ an $\varepsilon$ are calculated. For example, $\varepsilon_k^{2MHz}$ is the permittivity calculated by use of equation 10 at a frequency of 2 MHz.

Equation 9 and 10 is based on a plane wave model (equation 6) in an isotropic medium (equation 1), and physical zones for where these conditions are sufficiently fulfilled should be considered when applying the method to a formation. Equation 6 is an example of a plane wave and will in practice be valid when the receiver is located at a sufficiently great distance away from the transmitter and a sufficiently great distance from free charges. An isotropic medium is where the electrical properties can be treated as scalar ($\varepsilon$, $\sigma$, $\mu$). Since equation 1 and following equations are scalar, the present results are valid for isotropic media. Since the E-field behaves differently depending on the distance from the source, the E-field is classified into regions as a fraction of the wavelength, $\lambda$. Equation 6 show that $\lambda$ is

$$\lambda = \frac{2 \cdot \pi}{k_r} \qquad (13)$$

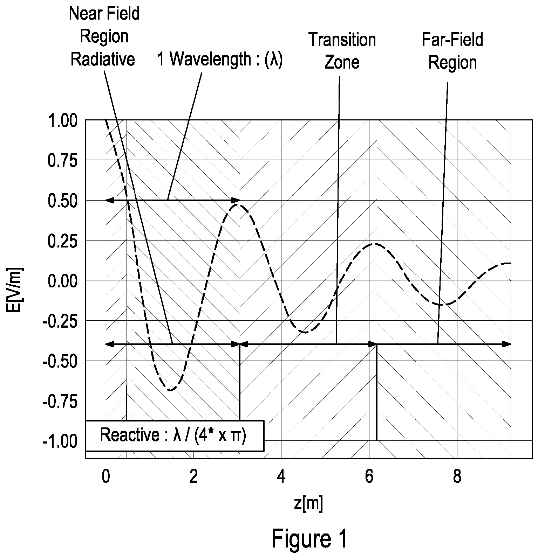

$k_r$ is given by equation 7. Elementary considerations such as by examination of the $E$ field of a dipole radiator show that there are three zones that may be considered. The near-field, or static, zone, where the Transmitter to Receiver Spacing (TRS) is small compared with $\lambda$, the transition zone where TRS ~ $\lambda$, and the radiation zone where TRS >> $\lambda$. There is no clear cut-off between these regions and they will in practice depend on the physical size of the antenna. For antennas equal to or shorter than one-half wavelength of the radiation they emit, it is common to classify the physical zone as illustrated by Figure 1. This classification is assumed to be a good approximation for LWD frequencies.

In the reactive part of the near field zone, close to the transmitter, the EM-field is heavily influenced by the transmitter, and the plane wave model shown is not valid. It will therefore be a minimum TRS for where a plane wave approximation can be expected and embodiments of the described method can be used to accurately determine the permittivity $\varepsilon_k^f$. For example, the described method should not be used with LWD measurements within the reactive part of the near field where TRS < $\lambda/4\pi$. The reactive part of near-field is labelled in Figure 1.

The radiative part of the near field can be approximated as quasi-static and pertains to low frequency situations in which the applied EM field varies slowly with time. The characteristic feature here is that the wavelength, $\lambda$, is large compared with the dimensions/volume (TRS) of the rock that is being measured. Equation 9 and 10 can be used with LWD measurements in the radiative part of the near field where $\lambda/4\pi$ < TRS < $\lambda$. That is, embodiments of the described method can be used to accurately determine the conductivity $\sigma_k^f$ and permittivity $\varepsilon_k^f$ for at least $\lambda/4\pi$ < TRS < $\lambda$. The radiative part of the near field is labelled in Figure 1.

The validity of the described method can be difficult to assess in the transition zone, since there is no clear cut-off between the near field and the far field zones. In the transition zone the EM field can behave like the radiative part of the near field, or like the far field or something in between. The transition zone is labelled in Figure 1.

In the far field zone, where $\lambda$ « TRS, the EM radiation will dominate, and the E-field will be more sensitive to absorption and scattering. The far field is labelled in Figure 1.

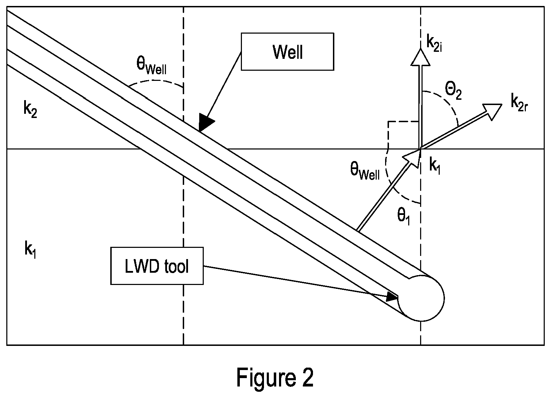

If the formation is anisotropic, reflection and refraction is expected if the angle of incident ($\theta_1$) does not exceed the critical angle of total reflection ($\theta_c$). The principle is illustrated by Figure 2. In such situations the refracted $k_r$ and $k_i$ will have different direction. This is explained by the phase match principle and Snell's law. From the phase match principle, $k_i$ will always be perpendicular to the conducting surface, while related to Snell's law $k_r$ is refracted by a real refraction angle $\theta_2$.

For LWD measurements in the radiative zones where $\lambda/4\pi$ < TRS, equation 9 and 10 is expected to:

- Fail in anisotropic formation where the angle of incidence $\theta_1$ is less than critical angel for total reflection, $\theta_c$.

- Fail when the E-field crosses into a new formation with electrical contrasts/discontinuity and $\theta_1 < \theta_c$.
- Be valid in isotropic medium where there is no electrical contrast, or where the angle of incidence is larger than the critical angle $\theta_c$.

Note that $\theta_c$ is a function of the electrical contrasts and can be quite large.

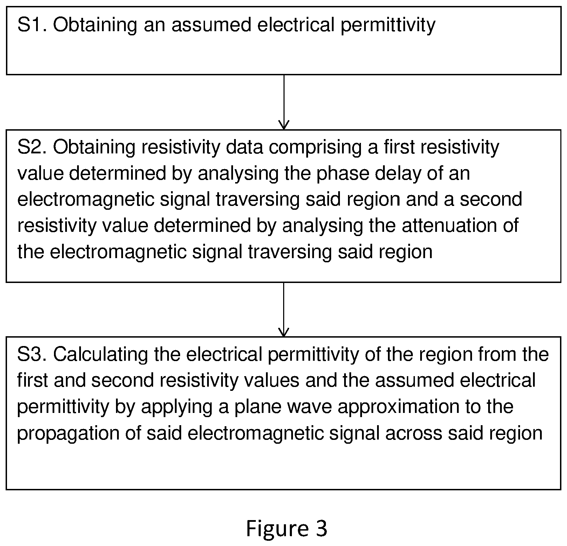

Figure 3 illustrates the steps of a method of determining the electrical permittivity $\varepsilon_k^f$ of a region of a subsurface formation surrounding a drilled borehole according to an embodiment. The method comprises obtaining an assumed electrical permittivity $\varepsilon_{LWD}$ (step S1) and obtaining resistivity data comprising a first resistivity value $R_p$ determined by analysing the phase delay $\delta$ of an electromagnetic signal traversing said region and a second resistivity value $R_a$ determined by analysing the attenuation $\alpha$ of the electromagnetic signal traversing said region (step S2). The method further comprises calculating the electrical permittivity of the region from the first and second resistivity values and the assumed electrical permittivity by applying a plane wave approximation to the propagation of said electromagnetic signal across said region (step S3). The method is a computer implemented method, wherein the computer comprises a processor for processing input data ($R_p$, $R_a$, $\varepsilon_{LWD}$) and generating output data ($\varepsilon_k^f$). In particular for geo-steering applications, sufficient computational capacity is required to process the data in real time. The input data can be stored in memory on the computer where it can be accessed by a processor, which applies equations 10, 11 and 12 to the input data to generate the output data.

**Determination of water saturation**

The Complex Refraction Index Model (CRIM) is the weighted sum of the wavenumber to the elements in the formation

$$\hat{k} = \hat{k}_w \cdot \phi \cdot S_w + \hat{k}_m \cdot (1 - \phi) +$$

$$\hat{k}_{hc} \cdot \phi \cdot (1 - S_w) \tag{14}$$

, and is used to calculate the amount of water ($S_w$). Index w is water, m is matrix and *hc* is hydrocarbon. $\Phi$ is the porosity. A high frequency approximation of CRIM can be used when calculating $S_w$. Using the high frequency approximation, the wavenumbers in equation 14 are replaced by the permittivity's only (i.e. at very high frequency, in equations 7 and 8, $\frac{\sigma}{\omega \varepsilon \varepsilon_0} \approx 0$ and therefore $k_i \approx 0$ and $k_r \approx \frac{\omega}{c}\sqrt{\mu\varepsilon} = \text{constant} \cdot \sqrt{\varepsilon}$).

CRIM does not account for the interfacial polarization and is therefore in principle not valid at LWD frequencies. The interfacial polarization is also known as the Maxwell-Wagner polarization and is related to the presence of charges that is concentrated at the surface of the rock when electrical field is applied. The interfacial polarization is one of three main physical phenomena contributing to the permittivity. The interfacial polarization vanishes past a certain frequency which may be around 108 Hz. Since the LWD frequency is far below 108 Hz, the interfacial polarization will contribute to the electrical permittivity, and the wavenumber (equation 1).

Embodiments described herein provide a modified version of CRIM, which can be used at LWD frequencies by applying the imaginary part of the wavenumber. It is assumed that the impact of the interfacial polarization can be added to equation 14 as a new element. The new element is the wavenumber associated with the interfacial polarization, $k_p$, weighted by $M_s$. $M_s$ is the volume water associated with the interfacial polarization at the surface of the matrix. The proposed modified CRIM is

$$\hat{k} = \hat{k}_w \cdot \phi \cdot S_w + \hat{k}_m \cdot (1 - \phi) +$$

$$\hat{k}_{hc} \cdot \phi \cdot (1 - S_w) + \hat{k}_p \cdot M_s \tag{15}$$

Index *p* is interfacial polarization. Equation 15 can then be split into its real part and its imaginary part

$$k_r = k_{wr} \cdot \phi \cdot S_w + k_{mr} \cdot (1 - \phi) +$$

$$k_{hcr} \cdot \phi \cdot (1 - S_w) + k_{pr} \cdot M_s \qquad (16)$$

$$k_i = k_{wi} \cdot \phi \cdot S_w + k_{mi} \cdot (1 - \phi) +$$

$$k_{hci} \cdot \phi \cdot (1 - S_w) + k_{pi} \cdot M_s \qquad (17)$$

Since the conductivity of the matrix and of the hydrocarbon is zero, the value on $k_{mi}$ and $k_{hci}$ is zero (see equation 8). $k_{pr}$ and $k_{pi}$ can be calculated with equation 7 and 8 if the electrical properties associated with the interfacial polarization $(\sigma_p, \varepsilon_p)$ is known. It can be assumed that that $\varepsilon_p$ is large and that $\sigma_p$ is small. $\sigma_p$ is assumed to be small since the presence of charges that is concentrated at the surface of the rock is not free to move. With a large value for $\varepsilon_p$ and small value for $\sigma_p$, the part $\sigma_p/(\omega\varepsilon_p\varepsilon_0)$ in equation 7 and 8 is expected to be very small and $k_{pr}$ and $k_i$ can be approximated by:

$$k_{pr} \approx \omega \cdot \sqrt{\mu_p \cdot \varepsilon_p} \qquad (18)$$

$$k_{pi} \approx 0 \qquad (19)$$

Use equation 19, $k_{mi} = k_{hci} = 0$ into equation 17, and solve with respect to $S_w$ to give

$$S_w = \frac{k_i}{k_{wi} \cdot \phi} \qquad (20)$$

$k_i$ is calculated by use of equation 8 with LWD $R_a$ and $\varepsilon_{LWD}$, and $\Phi$ can be calculated by use of e.g. the density log. The value on $k_{wi}$ can be calculated with equation 8 if the electrical properties to the formation water $(\sigma_w, \varepsilon_w)$ is known, by in-situ calibration in a zone where the pore space is 100% filled with water, $(k_{wi} = k_i / \Phi)$, or extract it from the dispersion $k_r(f)$ and $k_i(f)$.

Embodiments of the method were applied to LWD resistivity data and compared with results from commercial wireline tools. Data from three different wells was used.

- Example 1: $\varepsilon_k^f$ fit well with $\varepsilon_{ADT}^f$ in vertical wells on data from different LWD vendors.

- Example 2: The value of $k_r$, and then the calculated $\varepsilon_k^f$, have a too low value in deviated wells, and need to be corrected.
- Example 3: The water saturation calculated by use of equation 20 fits well with water saturation calculated by use of conventional methods.

In all examples Schlumberger ADT tool is used to acquire wire-line permittivity data. ADT acquired permittivity at four different frequencies $\varepsilon_{ADT}^{20MHZ}$, $\varepsilon_{ADT}^{80MHZ}$, $\varepsilon_{ADT}^{400MHZ}$ and $\varepsilon_{ADT}^{1GHZ}$.

Example 1:

It was shown that LWD permittivity and its dispersion fit well with permittivity data from commercial wire-line tools. To minimize the impact of anisotropy and refraction the examples are taken from two vertical wells. Both wells are drilled with oil-based mud. The first well comprises shale above a heterolithic hydrocarbon filled reservoir. The shale resistivity is approximately 2 Ohm-m and the reservoir resistivity is in the range from 2 - 10 Ohm-m. The LWD data was acquired by Halliburton which operates at frequencies, 125 kHz, 500 kHz and 2 MHz. $\varepsilon_{LWD}$ was equal 10 for all frequencies. $\sigma_k^f$ was calculate by equation 9 and $\varepsilon_k^f$ was calculated by equation 10.

The LWD measurements were mainly acquired at the border in between the reactive and radiative part of the near

field zone. $\varepsilon_k^f$ had a continuous curve for all three frequencies, except for a few small intervals where $\varepsilon_k^f$ was negative. The intervals where $\varepsilon_k^f$ was negative occurred where the resistivity and ADT permittivity showed electrical contrasts. The measurements at the lowest frequencies, $\varepsilon_k^{125kHz}$ was less influenced by electrical contrasts when compared to $\varepsilon_k^{400kHz}$ and $\varepsilon_k^{2MHz}$. The broad-banded dispersion plot showed that the level of $\varepsilon_k^f$ fit well in with the $\varepsilon_{ADT}^f$ dispersion for measurements in the radiative part of the near field. The permittivity values that were obtained from measurements in the reactive part of the nearfield were slightly too high when compared to the dispersion trend given by the other measurements.

The other well comprised shale above a homogeneous hydrocarbon filled reservoir, with a water zone at the bottom. The shale resistivity was approximately 2 Ohm-m, the hydrocarbon filled reservoir resistivity was in the range from 100 to 200 Ohm-m, and the water filled formation resistivity was approximately 1 Ohm-m. The LWD data was acquired by Schlumberger, at the frequencies 400 kHz and 2 MHz. $\varepsilon_{LWD}$ was obtained as set out in the research article: Anderson B. I. et al. 2007. "Observations of large dielectric effects on LWD propagation-resistivity logs", SPWLA 48th Annual Logging Symposium:

$$\varepsilon_{LWD}^{2MHz} = 5 + 88.5 \cdot \left(\frac{\sigma}{\sigma_0}\right)^{0.35} \tag{21}$$

$$\varepsilon_{LWD}^{400kHz} = 5 + 280 \cdot \left(\frac{\sigma}{\sigma_0}\right)^{0.46} \tag{22}$$

The conductivity scale $\sigma_0$ is equal to 1. $\sigma_k^f$ was calculated with equation 9 and $\varepsilon_k^f$ was calculated with equation 10. The LWD measurements were acquired in the reactive near field and in the radiative part of the near field zone. $R_a^{f400kHz}$ was not accurate in the reactive part of the near field and the calculated value $\varepsilon_k^f$ was not representative in this zone. For LWD measurements in the reactive part of the near field, $\varepsilon_k^f$ showed a continuous curve but with too high values compared to the dispersion trend from the ADT measurements of permittivity. For LWD measurements in the radiative field zone, $\varepsilon_k^f$ fluctuated. Where $\varepsilon_k^f$ was positive it showed reasonable values. The negative values occurred where the LWD resistivity and ADT permittivity showed electrical contrast. The broad-banded dispersion plot showed that the level of $\varepsilon_k^f$ dispersion fit in with the $\varepsilon_{ADT}^f$ dispersion in the radiative zone.

Example 2:

It was shown that the value of $k_r$, and then the calculated $\varepsilon_k^f$ (equation 5), had a too low value in deviated wells, which could, however, be corrected by the use of Snell's law. The tested well was a hetero-lithic hydrocarbon filled reservoir with shale above and below. The shale resistivity was approximately 1 Ohm-m and the reservoir resistivity was in the range of 5 to 10 Ohm-m. The well was drilled with oil-based mud and at an inclination of 30°. The LWD resistivities was acquired by Schlumberger and $\varepsilon_{LWD}$ was given by equation 21 and 22. Only $k_r$ was corrected for refraction by use of Snell's law. $\varepsilon_k^f$ that was not corrected for refraction showed large intervals with negative values. In the intervals where it was positive, the permittivity values were too low compared to $\varepsilon_{ADT}^f$. $\varepsilon_k^f$ that was corrected for refraction showed more continuous curves, and the permittivity values fit well with $\varepsilon_{ADT}^f$.

Example 3:

It was shown that the water saturation $S_w(k_i)$ calculated by the use of equation 20 agreed well with water saturation calculated by use of conventional methods. The conventional methods used were Archie's equation to calculate the water saturation $S_w(Archie)$, water saturation delivered by Schlumberger ADT services $S_w(ADT)$, and water saturation calculated by use of nuclear magnetic resonance (NMR) $S_w(NMR)$. $k_{wi}$ in equation 20 was 12.5 and found by calibration. The water saturation was determined in two wells using embodiments of the method described herein, and there was good agreement between $S_w(k_i)$, $S_w(Archie)$, $S_w(ADT)$ and $S_w(NMR)$ in both wells.

Embodiments herein provide new methods of determining the permittivity and water saturation in a formation. $\varepsilon_k^f$ has several benefits compared to $\varepsilon_{ADT}^f$ and many potential applications. An important benefit is that the LWD resistivity is acquired in nearly all drilled wells and that $\varepsilon_k^f$ can be extracted from the LWD measurements without significant extra cost. $\varepsilon_{ADT}^f$ is acquired on wire-line and can therefore often by technical and/or economical reason, not be accessible. Due the lower frequency, large TRS and shorter time between formation drilling and measurements, the LWD is far less affected by invasion of drilling mud when compare with the high frequency, short TRS dielectric wireline measurements. The values of $\varepsilon_k^f$ can therefore be more representative of non-invaded formation, which is generally the target for petrophysical evaluation. Since $\varepsilon_k^f$ and the wavenumber can be acquired in real time during drilling, it can be used proactively to identify bypass zone (equation 20) and it can be used as a geological marker (e.g. organic-rich source rock). This information can be useful for geo-steering purposes. In an embodiment, the determined permittivity is used to change a drilling operation. For organic-rich source rock or formation where the electrical permittivity is extremely high, 10 to 50 000 the error on the processed LWD $R_a$ and $R_p$ can be large due to dielectric effects. In such a case the formation resistivity can be calculated by use of $k_r$ and $k_i$ with equation 9. Equation 9 give the resistivity that is not influenced by the dielectric effect and will be more accurate compared with LWD $R_a$ and $R_p$. Since the LWD resistivity and dielectric wireline measurements operate at different frequencies, they have different sensitivity to the different polarization mechanisms. Different polarization mechanisms include electronic polarization, molecular orientation and the interfacial polarization. The LWD dispersion permittivity $\varepsilon_k^f$ is more sensitive for interfacial polarization and salinity to the formation water comparing with $\varepsilon_{ADT}^f$. This can allow information about the electrical properties of the formation water to be extracted, which is a key parameter in water saturation calculation from electrical logs. Use of $\varepsilon_k^f(f)$ may be used to extract information about VSH, CEC, and Archie's m. $\varepsilon_k^f(f)$ can also be used together with $\varepsilon_{ADT}^f(f)$ to increase the bandwidth of dielectric dispersion.

The classification of physical zones can be used to optimize the electromagnetic tool configuration. The optimal zone for measurements is in the radiative part of the near field where $\lambda/4\pi < \text{TRS} < \lambda$. Since the value on $\lambda$ (equation 7 and 13) is dynamic and is a function of the frequency and the electrical properties to the formation, an optimal electromagnetic tool should had the possibility to tune the frequency and/or TRS to be in the radiative near field zone, $\pi/4\pi < \text{TRS} < \lambda$.

As has already been noted, electrical resistivity in terms of a phase and an amplitude resistivity is almost always obtained in Logging While Drilling (LWD) operations. Moreover, such data is typically provided by the service vendor (performing the drilling) to the data customer (together with an assumed permittivity $\varepsilon_{LWD}$ used by the vendor to obtain the resistivities), e.g. the operator (license holder) of an oil and gas field. An approach to determining electrical permittivity $\varepsilon$ and its dispersion $\varepsilon(f)$ from LWD resistivity measurements, and their use to calculate water saturation, will now be described. This approach relies upon the principle that information about the electrical permittivity and dispersive permittivity [where dispersive permittivity is the measurement of $\varepsilon$ at multiple frequencies $(f)$] can be extracted from multi-frequency (amplitude and phase) resistivity measurements obtained by, for example, LWD (or WL). In one sense, $\varepsilon$ and $\varepsilon(f)$ can be considered as being hidden in the already obtained resistivities, and as such there is little extra effort required to obtain the permittivity data. Moreover, the permittivity data can be acquired in real-time and can be used to identify bypass zones, as a geological marker, and for geo-steering while drilling. The approach differs from CRIM which requires the use of a special and costly dielectric wireline tool to measure permittivity and which can only look at a very shallow depth into the formation.

The LWD resistivity accuracy can also be improved by replacing the empirically-based assumption about $\varepsilon$ with a more correct value in the LWD resistivity processing. This improvement in accuracy of the LWD (or WL) resistivity will be significant in rocks with large permittivity (e.g. organic-rich source rock). Results have been demonstrated to fit extremely well with data obtained from commercial wireline tools (deployed after drilling).

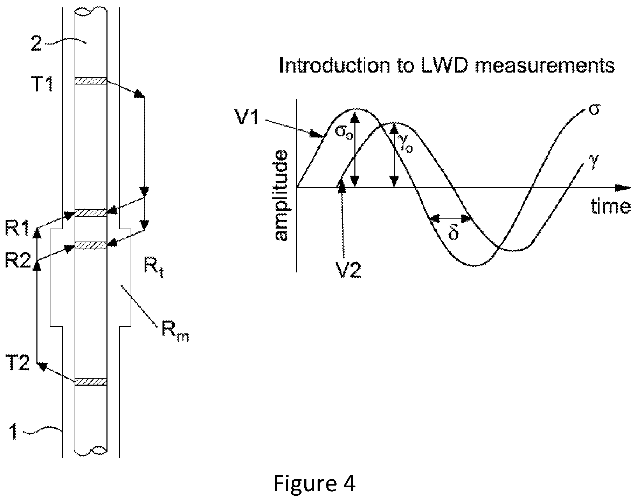

LWD tools are well known and described, for example, in Clark. B. et al. 1990. "Electromagnetic Propagation Logging While Drilling: Theory and Experiment." SPE. Sept. 1990. Figure 4 illustrates schematically a tool and method for collecting LWD data. A borehole 1 has been drilled by a drill bit (not shown) attached to the bottom of a drill string 2. A tool is incorporated into the drill string and comprises a pair of radio frequency transmitters T1,T2 and a pair of radio frequency receivers R1,R2. The receivers are spaced apart from one another whilst being centrally located between the two transmitters. Although not shown, the tool comprises a transmitter capable of transmitting digital data to the surface using a mud-pulsing technique, as well as electronic components for logging collected data (whereby the data can be recovered from these components after the tool has been recovered to the surface). The tool further comprises components for determining the precise location, both in terms of depth and angle, of the tool and therefore of the transmitters and receivers.

The transmitters and receivers are configured to be in relatively close proximity to the formation but without making electrical contact therewith. The transmitters each generate RF electrical voltages $V_0$ that are inductively coupled to the formation. The receivers then detect these signals transmitted through the formation. Transmitters may be operated one at a time or in parallel. The graph on the right hand side of Figure 4 illustrates by way of example the RF signals that are detected by the receivers R1,R2 when the transmitter T1 is operated. As receiver R2 is further from the transmitter T1 than the receiver R1, the amplitude of the signal received by the receiver R2 is reduced by an amount $\alpha = \sigma_0 - \gamma_0$. The phase of the signal received by the receiver R2 is shifted by an angle $\delta$ compared to the phase of the signal received by the receiver R1. The voltage detected by a receiver can be expressed as:

$$V(z,t) = V_0 e^{-\alpha z + \partial z} e^{-i\omega t} \qquad (23)$$

where z is the coordinate in space, $t$ is time, $\omega$ is the angular frequency ($2\pi f$), i.e. the signal frequency used by the LWD tool (e.g. f= 125kHz, 400kHz, 500 kHz, 2MHz or frequencies in or around this range), and e is Euler's number (2.72).

The conventional tool of Figure 4 therefore allows the amplitude decay and the phase shift of the transmitted signals (i.e. the "raw" measurements") to be obtained for a region of the formation surrounding the hole (extending perhaps one meter into the formation). Different sets of data can be obtained from the different transmitters, and the data combined to improve the quality of the results. The amplitude decay $\alpha$ and the phase shift $\delta$ are functions of the electrical properties of the formation (resistivity $R_t$, permittivity $\varepsilon$, and permeability $\mu$), i.e.

$$\alpha = f(R_t, \varepsilon, \mu) \qquad (24)$$

$$\partial = f(R_t, \varepsilon, \mu)$$

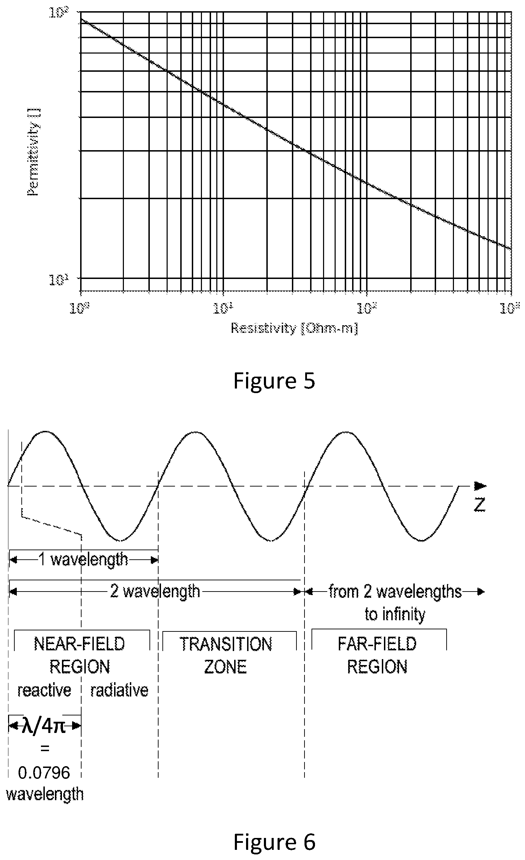

As already discussed above, conventional approaches to determining water saturation use the raw measurements, $\alpha$ and $\partial$, as inputs to an inversion process which involves iteratively refining estimates of (apparent) resistivity $R_t$ to produce a resistivity model that corresponds to the raw measurement data. It is common practice to assume only a relatively small impact of the electrical permittivity $\varepsilon$ on the processed (inverted) resistivity. Figure 5 shows an example model that may be applied (in effect, the curves of Figure 5 provide a scaling factor for resistivity using some determined permittivity/dielectric constant).

The approach presented here starts from the application of a simple plane wave approximation to the induced EM waves travelling through the formation (i.e. assuming that the waves have wavefronts (surface of constant phase) that are infinite parallel planes). This makes it possible to extract the permittivity $\varepsilon$ directly from the LWD phase and amplitude resistivity ($R_p$ and $R_a$) as supplied by the service vendor (and derived by the service vendor using an inversion process applied to $\alpha$ and $\partial$ and using an assumed permittivity $\varepsilon_{LWD}$.

For a simple plane wave, as set out in Ellis D. V, Singer J. M. 2008, "Well Logging for Earth Scientists". Springer; 2 edition, ISBN-10: 1402037384, the wavenumber k is given by:

$$\hat{k}^2 = \omega^2 \mu \varepsilon \left[1 + i \frac{\sigma}{\omega \varepsilon}\right] \qquad (25)$$

Note that equation 25 uses $\mu$ and $\varepsilon$ to denote the absolute permeability and permittivity and not the relative permittivity and permeability as in equation 1. Equation 25 can be reformulated to provide real and imaginary parts $k_i$ and $k_r$ and solved with respect to permittivity $\varepsilon$ and conductivity $\sigma$ (inverse of resistivity, $R_t$) as follows:

$$\varepsilon = \left(\frac{c}{\omega}\right)^2 \cdot \frac{k_r^2 - k_i^2}{\mu} \qquad \text{and} \quad \sigma = \frac{2 k_i k_r}{\omega \mu \cdot \mu_0} \qquad (26)$$

where $\mu$ is the relative electrical permeability, $c$ is the speed of light, $i$ is the imaginary number ($\sqrt{(-1)}$), and $\mu_0$ is the free

space electrical permeability (a universal constant).

A plane wave approximation for the electrical field $E$ travelling in a direction $z$ and at time $t$ at a receiver is given by:

$$\overline{E}(z,t) = Re\{\widehat{x}\,\overline{E}_0 e^{-k_i z + k_r z} e^{-i\omega t}\} \tag{27}$$

where $E_0$ is the field at start time zero, $z$ is the position in space, $t$ is time, and x is the direction perpendicular to $z$. Here, $ki$ describes the damping/decay of the wave and $kr$ describes the phase shift of the wave. Equation (27) shows us that $k_i$ is the amplitude and can be estimated using $R_a$, while $k_r$ is the phase and can be estimated using $R_p$.

The real and imaginary parts of the wavenumber - see Equation (25) can be defined as follows:

$$k_r = \omega\sqrt{\mu\varepsilon}\left[\frac{1}{2}\left(\sqrt{1 + \left(\frac{\sigma_p}{\omega\varepsilon}\right)^2} + 1\right)\right]^{1/2}, \; k_i = \omega\sqrt{\mu\varepsilon}\left[\frac{1}{2}\left(\sqrt{1 + \left(\frac{\sigma_a}{\omega\varepsilon}\right)^2} - 1\right)\right]^{1/2} \tag{28}$$

Equation (28) shows the mathematical relation between $k_r$ and $R_p$ (=1/σp) and between $k_i$ and $R_a$ (=1/σa). $\varepsilon$ is known and equal $\varepsilon_{LWD}$. Equation 28 is similar to equation 7 and 8 but using $\mu$ and $\varepsilon$ to denote absolute rather than relative permeability and permittivity.

Returning to the CRIM approach described above, for LWD frequencies, CRIM is sensitive to both permittivity and conductive losses [conductive loss is the same as the complex part of the $\text{wavenumber} = \frac{\sigma}{\omega\varepsilon}$]. In addition, there is the impact of interfacial polarization between water and matrix. CRIM is not valid without some modification to account for the impact of polarization. The weighted sum of the wavenumber of CRIM is therefore reformulated as follows:

$$k = k_w \cdot \phi \cdot S_w + k_m \cdot (1 - \phi) + k_{hc} \cdot \phi \cdot (1 - S_w) + k_p \cdot \phi \cdot S_{wp} \tag{29}$$

where the index w is water, $m$ is matrix, $hc$ is hydrocarbon, $p$ is interfacial polarization between water and matrix, and $wp$ is interfacial polarized water. The final term of equation (28), $k_p \cdot \phi \cdot S_{wp}$, takes interfacial polarization into account ($S_{wp}$ is the amount of water that coats the matrix and contributes to the extra polarizations). $\phi \cdot S_{wp} = M_s$ in equation 15.

By applying the electrical properties to the individual elements of Equation (28) it can be shown that (wher $\Phi$ may be assumed to be small), equation (29) can be reduced to:

$$k \approx k_w \cdot \phi \cdot S_w + k_p \cdot \phi \cdot S_{wp} \tag{30}$$

Equation (30) can be split into real and imaginary parts:

$$k_r = k_{wr} \cdot \phi \cdot S_w + k_{pr} \cdot \phi \cdot S_{wp} \tag{31}$$

$$k_i = k_{wi} \cdot \phi \cdot S_w + k_{pi} \cdot \phi \cdot S_{wp} \tag{32}$$

The polarized water is bounded to the surface of the formation and there are no free charges. Therefore $\sigma_p \approx 0$ and the calculated $k_{pr}$ and $k_i$ by use of Equations (28) are:

$$k_{pr} = \omega \cdot \sqrt{\mu_p \cdot \varepsilon_p} \tag{33}$$

$$k_{pi} = 0 \tag{34}$$

At low frequency, the conductive losses, $\frac{\sigma}{\omega\varepsilon}$, will be far larger than 1 (see Equations(28)). In this case $k_{wr} \approx k_{wi} = k_w$ (see Equation (28)). If $k_w$ and $k_{pr}$ are known, Equations (31) and (32) represent two equations with the two unknowns, $S_w$ and $S_{wp}$, where $S_{wp}$ is the amount of water that coats the matrix and contributes to an interfacial polarization. Solving Equations (31) and (32) with respect to $S_w$ and $S_{wp}$ gives the following:

$$S_w = \frac{k_i}{k_{wi}\cdot\phi} = \frac{k_i = \omega\sqrt{\mu\varepsilon_{LWD}}\left[\frac{1}{2}\left(\sqrt{1+\left(\frac{1}{\omega\cdot R_a\varepsilon_{LWD}}\right)^2}-1\right)\right]^{1/2}}{k_{wi}\cdot\phi} \tag{35}$$

where $k_w$ is a constant and can be found by tuning $S_w$ (Equation (35)) to be equal to one in shale zones, $k_{wi}=k_i/\phi$, or can be calculated by Equation (28) if $R_w$ and $\varepsilon_w$ are known, and

$$S_{wp} = \frac{k_r - k_i}{k_{pr}\cdot\phi} = \frac{\omega\sqrt{\mu\varepsilon_{LWD}}}{k_{pr}\cdot\phi\cdot\sqrt{2}} \cdot \left[\left[\left(\sqrt{1+\left(\frac{1}{\omega\cdot R_p\varepsilon_{LWD}}\right)^2}+1\right)\right]^{1/2} - \left[\left(\sqrt{1+\left(\frac{1}{\omega\cdot R_a\varepsilon_{LWD}}\right)^2}-1\right)\right]^{1/2}\right]$$

$$\tag{36}$$

where $k_{pr}$ can be tuned in zones for where $S_w$ is expected equal $S_{wp}$.

Considering further Equation (35), $\varepsilon_{LWD}$ and $R_a$ are data provided by the service vendor, whilst $\mu$ is assumed to be 1, and $\omega = 2\pi f$. The porosity, $\phi$, is calculated using the measured density (which can be acquired by either LWD or WL).

Figure 6 illustrates the physical zones where this new approach works correctly (radiative part of the near field):

$$\lambda/4\pi < TRS < \lambda, \qquad \lambda = \frac{2\pi}{k_r}$$

where TRS is the Transmitter to Receiver Spacing and z is again the coordinate space.

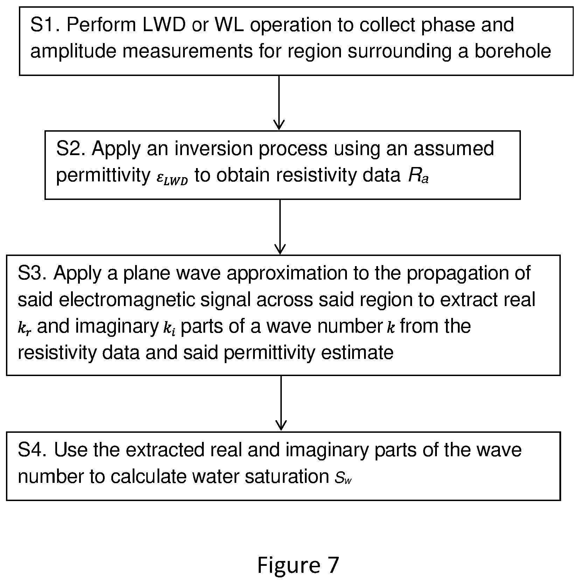

Figure 7 illustrates a method of estimating the water saturation level $S_w$ of a region of a subsurface formation surrounding a drilled borehole and comprises the following steps: S1. Perform an LWD or WL operation to collect phase and amplitude measurements for region surrounding a borehole.

S2. Apply an inversion process using an assumed permittivity $\varepsilon_{LWD}$ to obtain resistivity data $R_a$.

S3. Apply a plane wave approximation to the propagation of the electromagnetic signal across the region to extract real $k_r$ and imaginary $k_i$ parts of a wave number $k$ from the resistivity data and the permittivity estimate.

S4. Use the extracted real and imaginary parts of the wave number to calculate the water saturation $S_w$.

It will be appreciated by the person of skill in the art that various modifications may be made to the above described embodiments without departing from the scope of the present invention.

**Claims**

1.  A computer-implemented method of determining the electrical permittivity $\varepsilon_k^f$ of a region of a subsurface formation surrounding a drilled borehole, the method comprising:

    obtaining an assumed electrical permittivity $\varepsilon_{LWD}$; and
    obtaining measured resistivity data comprising a first resistivity value $R_p$ determined by analysing the phase delay $\delta$ of an electromagnetic signal traversing said region and a second resistivity value $R_a$ determined by analysing the attenuation $\alpha$ of the electromagnetic signal traversing said region;
    **the method characterised by:**
    calculating the electrical permittivity of the region from the first and second resistivity values and the assumed electrical permittivity by applying a plane wave approximation to the propagation of said electromagnetic signal across said region.

2.  A method according to claim 1, wherein said resistivity data is obtained by Logging While Drilling (LWD) using one or more electromagnetic transmitter and receiver pairs, wherein the transmitter to receiver spacing (TRS) is within the radiative zone of the near field region of the or each transmitter.

3.  A method according to claim 1 or 2, wherein said step of calculating the electrical permittivity comprises calculating the electrical permittivity according to the following equation:

$$\varepsilon = \frac{1}{2} \cdot \varepsilon_{LWD} \cdot \left[ 2 + A_p - A_a \right]$$

, where $\varepsilon$ is the calculated electrical permittivity, $\varepsilon_{LWD}$ is the assumed electrical permittivity, and

$$A_p = \sqrt{1 + \left( \frac{1}{\omega \cdot R_p \cdot \varepsilon_0 \cdot \varepsilon_{LWD}} \right)^2}$$

$$A_a = \sqrt{1 + \left( \frac{1}{\omega \cdot R_a \cdot \varepsilon_0 \cdot \varepsilon_{LWD}} \right)^2}$$

, where $\omega$ is the angular frequency of the electromagnetic signal, $R_p$ is the first resistivity value, $R_a$ is the second resistivity value, and $\varepsilon_0$ is the electrical permittivity of free space.

4. A method according to claim 1 or 2, wherein the step of calculating the electrical permittivity comprises:

extracting a real part $k_r$ and an imaginary part $k_i$ of a wavenumber from the resistivity data;
using the real and imaginary parts to calculate the electrical permittivity.

5. A method according to any one of claims 1 to 4 and comprising using the calculated electrical permittivity to calculate new resistivity values from the phase delay and the attenuation of the electromagnetic signal.

6. A method according to any one of claims 1 to 5, wherein the resistivity data comprises further resistivity values determined from the phase delay and attenuation of another electromagnetic signal that traversed said region and having a different frequency, and wherein the method further comprises calculating another electrical permittivity of the region from the further resistivity values.

7. A method according to any one of claims 1 to 6 and comprising drilling the borehole, wherein said step of calculating the electrical permittivity is performed while drilling.

8. A computer device comprising:

a receiver for receiving electromagnetic data; and
a processor arranged to carry out the method of claim 1.

9. A computer program comprising non-transitory computer readable code which, when run on a computer device, causes the computer device to carry out the method of claim 1.

**Patentansprüche**

1. Computerimplementiertes Verfahren zum Bestimmen der elektrischen Dielektrizitätskonstante $\varepsilon_k^f$ einer Region einer unterirdischen Formation, die ein gebohrtes Bohrloch umgibt, wobei das Verfahren Folgendes umfasst:

Erhalten einer angenommenen elektrischen Dielektrizitätskonstante $\varepsilon_{LWD}$; und
Erhalten von gemessenen spezifischen Widerstandsdaten, umfassend einen ersten spezifischen Widerstandswert $R_p$, der durch Analysieren der Phasenverzögerung $\delta$ eines elektromagnetischen Signals bestimmt wird, das die Region durchquert, und einen zweiten spezifischen Widerstandswert $R_a$, der durch Analysieren der Abschwächung $\alpha$ des elektromagnetischen Signals bestimmt wird, das die Region durchquert;
wobei das Verfahren **gekennzeichnet ist durch**:
Berechnen der elektrischen Dielektrizitätskonstante der Region aus dem ersten und dem zweiten spezifischen Widerstandswert und der angenommenen elektrischen Dielektrizitätskonstante **durch** Anwenden einer Näherung für eine ebene Welle auf die Ausbreitung des elektromagnetischen Signals über die Region.

**2.** Verfahren nach Anspruch 1, wobei die spezifischen Widerstandsdaten durch Protokollieren während des Bohrens (LWD) unter Verwendung eines oder mehrerer elektromagnetischer Sender- und Empfängerpaare erhalten werden, wobei der Sender-Empfänger-Abstand (TRS) innerhalb der Strahlungszone des Nahfeldbereichs des oder jedes Senders liegt.

**3.** Verfahren nach Anspruch 1 oder 2, wobei der Schritt des Berechnens der elektrischen Dielektrizitätskonstante das Berechnen der elektrischen Dielektrizitätskonstante nach der folgenden Gleichung umfasst:

$$\varepsilon = \frac{1}{2} \cdot \varepsilon_{LWD} \cdot \left[ 2 + A_p - A_a \right] \ ,$$

worin $\varepsilon$ die berechnete elektrische Dielektrizitätskonstante ist, $\varepsilon_{LWD}$ die angenommene elektrische Dielektrizitätskonstante ist, und

$$A_p = \sqrt{1 + \left( \frac{1}{\omega \cdot R_p \cdot \varepsilon_0 \cdot \varepsilon_{LWD}} \right)^2}$$

$$A_a = \sqrt{1 + \left( \frac{1}{\omega \cdot R_a \cdot \varepsilon_0 \cdot \varepsilon_{LWD}} \right)^2} \ ,$$

worin $\omega$ die Winkelfrequenz des elektromagnetischen Signals ist, $R_p$ der erste spezifische Widerstandswert ist, $R_a$ der zweite spezifische Widerstandswert ist, und $\varepsilon_0$ die elektrische Dielektrizitätskonstante des freien Raums ist.

**4.** Verfahren nach Anspruch 1 oder 2, wobei der Schritt des Berechnens der elektrischen Dielektrizitätskonstante Folgendes umfasst:

Extrahieren eines Realteils $k_r$ und eines Imaginärteils $k_i$ einer Wellenzahl aus den spezifischen Widerstandsdaten;
Verwenden des Real- und des Imaginärteils zum Berechnen der elektrischen Dielektrizitätskonstante.

**5.** Verfahren nach einem der Ansprüche 1 bis 4, umfassend das Verwenden der berechneten elektrischen Dielektrizitätskonstante zum Berechnen neuer spezifischer Widerstandswerte aus der Phasenverzögerung und der Abschwächung des elektromagnetischen Signals.

**6.** Verfahren nach einem der Ansprüche 1 bis 5, wobei die spezifischen Widerstandsdaten weitere spezifische Widerstandswerte umfassen, die aus der Phasenverzögerung und der Abschwächung eines anderen elektromagnetischen Signals bestimmt werden, das die Region durchquert hat und eine unterschiedliche Frequenz aufweist, und wobei das Verfahren ferner das Berechnen einer anderen elektrischen Dielektrizitätskonstante der Region aus den weiteren spezifischen Widerstandswerten umfasst.

**7.** Verfahren nach einem der Ansprüche 1 bis 6, und umfassend das Bohren des Bohrlochs, wobei der Schritt des Berechnens der elektrischen Dielektrizitätskonstante während des Bohrens durchgeführt wird.

**8.** Computervorrichtung, umfassend:

einen Empfänger zum Empfangen elektromagnetischer Daten; und
einen Prozessor, der angeordnet ist, um das Verfahren nach Anspruch 1 auszuführen.

**9.** Computerprogramm, umfassend nichtflüchtigen, computerlesbaren Code, der bei Ausführung auf einer Computervorrichtung die Computervorrichtung veranlasst, das Verfahren nach Anspruch 1 auszuführen.

**Revendications**

1. Procédé mis en œuvre par ordinateur pour déterminer la permittivité électrique $\varepsilon_k^f$ d'une région d'une formation de subsurface entourant un trou de forage foré, le procédé comprenant :

   l'obtention d'une permittivité électrique supposée $\varepsilon_{LWD}$ ; et
   l'obtention de données de résistivité mesurées comprenant une première valeur de résistivité $R_p$ déterminée par l'analyse du retard de phase $\delta$ d'un signal électromagnétique traversant ladite région et une deuxième valeur de résistivité $R_a$ déterminée par l'analyse de l'atténuation $\alpha$ du signal électromagnétique traversant ladite région ;
   le procédé étant **caractérisé par** :
   le calcul de la permittivité électrique de la région à partir de la première et de la deuxième valeur de résistivité et de la permittivité électrique supposée en appliquant une approximation d'onde plane à la propagation dudit signal électromagnétique à travers ladite région.

2. Procédé selon la revendication 1, dans lequel lesdites données de résistivité sont obtenues par diagraphie en cours de forage (LWD) en utilisant une ou plusieurs paires d'émetteur et de récepteur électromagnétiques, dans lesquelles l'espacement émetteur-récepteur (TRS) se situe dans la zone radiative de la région de champ proche de l'émetteur ou de chaque émetteur.

3. Procédé selon la revendication 1 ou 2, dans lequel ladite étape de calcul de la permittivité électrique comprend le calcul de la permittivité électrique selon l'équation suivante :

$$\varepsilon = \frac{1}{2} \cdot \varepsilon_{LWD} \cdot \left[2 + A_p - A_a\right] \quad ,$$

où $\varepsilon$ est la permittivité électrique calculée, $\varepsilon_{LWD}$ est la permittivité électrique supposée, et

$$A_p = \sqrt{1 + \left(\frac{1}{\omega \cdot R_p \cdot \varepsilon_0 \cdot \varepsilon_{LWD}}\right)^2}$$

$$A_a = \sqrt{1 + \left(\frac{1}{\omega \cdot R_a \cdot \varepsilon_0 \cdot \varepsilon_{LWD}}\right)^2}$$

où $\omega$ est la fréquence angulaire du signal électromagnétique, $R_p$ est la première valeur de résistivité, $R_a$ est la deuxième valeur de résistivité, et $\varepsilon_0$ est la permittivité électrique de l'espace libre.

4. Procédé selon la revendication 1 ou 2, dans lequel l'étape de calcul de la permittivité électrique comprend :

   l'extraction d'une partie réelle $k_r$ et d'une partie imaginaire $k_i$ d'un nombre d'onde à partir des données de résistivité ;
   l'utilisation des parties réelle et imaginaire pour calculer la permittivité électrique.

5. Procédé selon l'une quelconque des revendications 1 à 4 et comprenant l'utilisation de la permittivité électrique calculée pour calculer de nouvelles valeurs de résistivité à partir du retard de phase et de l'atténuation du signal électromagnétique.

6. Procédé selon l'une quelconque des revendications 1 à 5, dans lequel les données de résistivité comprennent des valeurs de résistivité supplémentaires déterminées à partir du retard de phase et de l'atténuation d'un autre signal électromagnétique ayant traversé ladite région et ayant une fréquence différente, et dans lequel le procédé comprend en outre le calcul d'une autre permittivité électrique de la région à partir de valeurs de résistivité supplémentaires.

7. Procédé selon l'une quelconque des revendications 1 à 6 et comprenant le forage du trou de forage, dans lequel ladite étape de calcul de la permittivité électrique est effectuée pendant le forage.

**8.** Dispositif informatique comprenant :

un récepteur destiné à recevoir des données électromagnétiques ; et
un processeur agencé pour mettre en œuvre le procédé selon la revendication 1.

**9.** Programme d'ordinateur comprenant un code lisible par ordinateur non transitoire qui, lorsqu'il est exécuté sur un dispositif informatique, amène le dispositif informatique à mettre en œuvre le procédé selon la revendication 1.

Figure 1

Figure 2

S1. Obtaining an assumed electrical permittivity

S2. Obtaining resistivity data comprising a first resistivity value determined by analysing the phase delay of an electromagnetic signal traversing said region and a second resistivity value determined by analysing the attenuation of the electromagnetic signal traversing said region

S3. Calculating the electrical permittivity of the region from the first and second resistivity values and the assumed electrical permittivity by applying a plane wave approximation to the propagation of said electromagnetic signal across said region

Figure 3

Figure 4

Figure 5

Figure 6

S1. Perform LWD or WL operation to collect phase and amplitude measurements for region surrounding a borehole

S2. Apply an inversion process using an assumed permittivity $\varepsilon_{LWD}$ to obtain resistivity data $R_a$

S3. Apply a plane wave approximation to the propagation of said electromagnetic signal across said region to extract real $k_r$ and imaginary $k_i$ parts of a wave number $k$ from the resistivity data and said permittivity estimate

S4. Use the extracted real and imaginary parts of the wave number to calculate water saturation $S_w$

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ARCHIE, G.E**. The Electrical Resistivity Log as an Aid in Determining Some Reservoir Characteristics. *Trans. of AIME*, 1942, vol. 146 (1), 54-62
- **HIZEM et al.** Dielectric Dispersion: A New Wireline Petrophysical Measurements. *SPE*, 2008, 116130
- **ANDERSON B**. Observations of Large Dielectric Effects on LWD Propagation-Resistivity Logs. *SPWLA Annual Logging Symposium*, 01 January 2007
- **ANDERSON B. I et al.** Observations of large dielectric effects on LWD propagation-resistivity logs. *SPWLA 48th Annual Logging Symposium*, 2007
- **CLARK. B et al.** Electromagnetic Propagation Logging While Drilling: Theory and Experiment. *SPE*, September 1990
- **ELLIS D. V ; SINGER J. M**. Well Logging for Earth Scientists. Springer, 2008